# EUROPÄISCHE PATENTSCHRIFT

(11) **EP 1 114 523 B1**
(45) Veröffentlichungstag und Bekanntmachung des Hinweises auf die Patenterteilung: **21.07.2004**
(21) Anmeldenummer: 99969551.3
(22) Anmeldetag: 15.01.1999
(51) Int. Cl.: H04B 1/48, H04B 1/40

(54) **MEHRBAND-ANTENNENSCHALTER**
MULTIBAND ANTENNA SWITCHER
COMMUTATEUR D'ANTENNE MULTIBANDE

(30) Priorität: 17.09.1998 DE 19842706
(43) Veröffentlichungstag der Anmeldung: 11.07.2001
(73) Patentinhaber: SIEMENS AKTIENGESELLSCHAFT, 80333 München (DE)
(72) Erfinder: FICKENSCHER, Thomas, D-90762 Fürth (DE); JENKINS, Roland, D-46483 Wesel (DE)
(86) Internationale Anmeldenummer: PCT/DE1999/000077
(87) Internationale Veröffentlichungsnummer: WO 2000/018026

(56) Entgegenhaltungen:
- EP-A- 0 823 751
- JP-A- 2 108 301
- US-A- 5 815 804

## Beschreibung

Die vorliegende Erfindung betrifft einen Mehrband-Antennenschalter, der zum Umschalten zwischen einem Sendezweig und einem Empfangszweig eines Mehrband-Mobilfunktelefons verwendet werden kann.

In den letzten Jahren sind Mobilfunknetze unterschiedlicher Standards entwickelt worden, die bei unterschiedlichen Frequenzbändern arbeiten. Zum Beispiel arbeitet das Mobilfunknetz des Standards GSM900 im Bereich von 900 MHz, arbeitet das Mobilfunknetz des Standards GSM1800 im Bereich von 1800-MHz und arbeitet das Mobilfunknetz des Standards PCS1900 im Bereich von 1900 MHz.

Demgemäß ist es erwünscht, Mobilfunktelefone oder ähnliche Geräte zu schaffen, die bei mehreren verschiedenen Frequenzbändern betreibbar sind, das heißt, die in der Lage sind, bei unterschiedlichen Standards von Mobilfunknetzen zu arbeiten.

Weiterhin ist es bei Mobilfunktelefonen für zum Beispiel die Standards GSM900 und GSM1800 erforderlich, die Sende- und Empfangszweige der Mobilfunktelefone gemäß dem TDMA-Konzept für GSM-Mobilfunktelefone zu schalten. Dies bedeutet, daß es erforderlich ist, daß die Sende- und Empfangszweige zeitlich voneinander abgegrenzt aktiv sind.

Aus der gattungsbildenden Druckschrift JP 02 108301 A ist eine Mehrband-Antennenschaltvorrichtung bekannt, die einen Sende- und Empfangszweig aufweist, welche über einen Verbindungsknoten miteinander und mit einer Antenne bzw. einem Ein-/Ausgangsanschluss verbunden sind. Im Empfangszweig befindet sich ein Transformationsglied, während dem Ein-/Ausgangsanschluss eine Filtereinrichtung vorgeschaltet ist. Mittels eines über einen Steueranschluss zugeführten Bias-Signals wird eine Schalteinrichtung derart angesteuert, dass für hohe Frequenzsignale der Ein-/Ausgangsanschluss nahezu verlustfrei mit dem Sendezweig verbunden und die Verbindung zum Empfangszweig unterbrochen wird. Bei fehlendem Bias-Signal wird andererseits die Verbindung zwischen Sendezweig und Ein-/Ausgangsanschluss unterbrochen und das vom Ein-/Ausgangsanschluss kommende Signal nahezu verlustfrei dem Empfangszweig zugeführt. Diese Umschaltung zwischen Sende- und Empfangszweig ist jedoch für ein bei mehreren Frequenzen arbeitendes Mobilfunktelefon nicht geeignet.

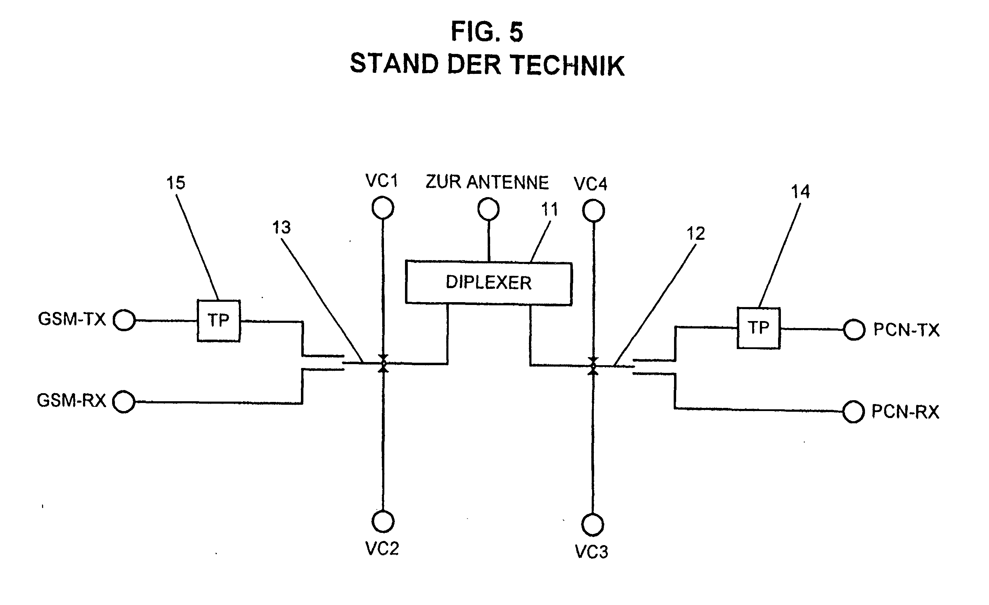

Fig. 5 zeigt ein Blockschaltbild eines weiteren Zweiband-Antennenschalters gemäß dem Stand der Technik, der dazu dient, die Sende- und Empfangszweige eines in den Standards GSM (900 MHz) und PCN (1800 MHz) arbeitenden Mobilfunktelefons umzuschalten. Dieser Antennenschalter besteht aus einem die Frequenzbänder der Standards GSM und PCN trennenden/zusammenfassenden Diplexer 11, einem ersten Wechselschalter 12, einem zweiten Wechselschalter 13, einem ersten ersten Tiefpaß 14 und einem zweiten Tiefpaß 15. Weiterhin weist der Antennenschalter einen GSM-Sendeanschluß GSM-TX, einen GSM-Empfangsanschluß GSM-RX, einen PCN-Sendeanschluß PCN-TX. einen PCN-Empfangsanschluß PCN-RX, einen Antennenanschluß und vier Steueranschlüsse VC1 bis VC4 auf.

Die Funktionsweise dieses Mehrband-Antennenschalters ist wie folgt.

An die vier Steueranschlüsse VC1 bis VC4 werden jeweilige Steuersignale angelegt, die dazu dienen, den ersten und zweiten Wechselschalter 12 bzw. 13 auf eine Sende- oder Empfangsbetriebsart einzustellen. Die Beziehung zwischen den verschiedenen an die Steueranschlüsse angelegten Signalen und der jeweiligen Betriebsart ist in der nachfolgenden Tabelle dargelegt.

**Tabelle**

| Betriebsart | VC1 | VC2 | VC3 | VC4 |
|---|---|---|---|---|
| GSM-Senden | hoch | Niedrig | niedrig | niedrig |
| GSM-Empfangen | niedrig | hoch | niedrig | niedrig |
| PCN-Senden | niedrig | Niedrig | niedrig | hoch |
| PCN-Empfangen | niedrig | Niedrig | hoch | niedrig |

Aus der Tabelle ist es ersichtlich, daß der zweite Wechselschalter 13 bei einem hohen Signalpegel am Steueranschluß VC1 über den zweiten Tiefpaß 15 mit dem GSM-Sendeanschluß GSM-TX verbunden ist, daß der zweite Wechselschalter 13 bei einem hohen Signalpegel am Steueranschluß VC2 mit dem GSM-Empfangsanschluß GSM-RX verbunden ist, daß der erste Wechselschalter 12 bei einem hohen Signalpegel am Steueranschluß VC4 über den ersten Tiefpaß 15 mit dem PCN-Sendeanschluß PCN-TX verbunden ist und daß der erste Wechselschalter 12 bei einem hohen Signalpegel am Steueranschluß VC3 mit dem PCN-Empfangsanschluß PCN-RX verbunden ist.

In der GSM-Sendebetriebsart (VC1 an hohem Signalpegel) wird ein GSM-Sendesignal von dem GSM-Sendeanschluß GSM-TX über den zweiten Tiefpaß 15, den zweiten Wechselschalter 13 und den Diplexer 11 zu einer an den Antennenanschluß angeschlossenen Antenne ausgegeben und von dieser abgestrahlt.

In der GSM-Empfangsbetriebsart (VC2 an hohem Signalpegel) wird ein GSM-Empfangssignal von einer an den Antennenanschluß angeschlossenen Antenne über den Diplexer 11 und den zweiten Wechselschalter 13 in den GSM-Empfangsanschluß GSM-RX eingegeben.

In der PCN-Sendebetriebsart (VC4 an hohem Signalpegel) wird ein PCN-Sendesignal von dem PCN-Sendeanschluß PCN-TX über den ersten Tiefpaß 14, den ersten Wechselschalter 12 und den Diplexer 11 zu einer an den Antennenanschluß angeschlossenen Antenne ausgegeben und von dieser abgestrahlt.

In der PCN-Empfangsbetriebsart (VC3 an hohem Signalpegel) wird ein PCN-Empfangssignal von einer an den Antennenanschluß angeschlossenen Antenne über den Diplexer 11 und den ersten Wechselschalter 12 in den PCN-Empfangsanschluß PCN-RX eingegeben.

Es ist anzumerken, daß der zuvor beschriebene Mehrband-Antennenschalter ein auf GaAs integrierter Schalter ist, der vier Feldeffekttransistoren, jeweils einer als zweipoliger Schalter, und den einen Diplexer beinhaltet.

Der zuvor beschriebene Antennenschalter weist jedoch die folgenden Nachteile auf. Direkt am Antennenanschluß ist der Diplexer 11 angeschlossen und danach sind die ersten und zweiten Wechselschalter 12 bzw. 13 im PCN-Zweig bzw. im GSM-Zweig vorhanden. Dadurch sind zwei Wechselschalter erforderlich, die außerdem zusätzlich mit insgesamt vier unterschiedlichen Steuersignalen angesteuert werden müssen. Das Vorsehen derartiger Wechselschalter ist jedoch aufwendig und teuer, da die Wechselschalter für die verwendeten Frequenzen von 900 und 1800 MHz geeignet sein müssen. Außerdem erfordern die vier notwendigen Steuersignale eine aufwendige äußere Lcgik zum Steuern der Wechselschalter. Schließlich weist der Antennenschalter eine große äußere Abmessung auf.

Die vorliegende Erfindung ist im Hinblick auf die vorhergehenden Probleme geschaffen worden und ihre Aufgabe besteht demgemäß darin, einen Mehrband-Antennenschalter zu schaffen, der billig und klein ist und der außerdem mit nur einem einzigen Steuersignal angesteuert werden muß.

Diese Aufgabe wird erfindungsgemäß mittels den im Anspruch 1 angegebenen Maßnahmen gelöst.

Genauer gesagt weist ein erfindungsgemäßer Mehrband-Antennenschalter für ein erstes und zweites Nutzfrequenzband, wobei das erste Nutzfrequenzband eine höhere Frequenz aufweist als das zweite Nutzfrequenzband, einen Sende- und einen Empfangszweig, die parallel zueinander angeordnet und an einem Verbindungsknoten miteinander verbunden sind, ein in dem Empfangszweig angeordnetes Transformationsglied, eine zwischen dem Verbindungsknoten und einem Antennenanschluß angeordnete Filtereinrichtung und eine mittels eines vorbestimmten logischen Signals ansteuerbare Schalteinrichtung auf, wobei die Schalteinrichtung auf ein Anlegen des vorbestimmten logischen Signals hin den Sendezweig mit dem Antennenanschluß verbindet und ansonsten der Sendezweig von dem Antennenanschlaß getrennt und der Empfangszweig mit dem Antennenanschluß verbunden ist, das Transformationsglied im Sendefall bezüglich des ersten Nutzfrequenzbands einen Leerlauf des Empfangszweigs an dem Verbindungsknoten bewirkt und das Transformationsglied und die Filtereinrichtung derart aufeinander abgestimmt sind, daß im Sendefall bezüglich des zweiten Nutzfrequenzbands ein nichtohmscher Anteil einer Eingangsimpedanz des Transformationsglieds an dem Verbindungsknoten im wesentlichen kompensiert wird.

Dadurch kann ein Mehrband-Antennenschalter verwirklicht werden, der lediglich einen einzigen Schalter aufweist und der außerdem mittels eines einzigen Steuersignals angesteuert werden kann.

Vorzugsweise weist der Sendezweig einen Sendeanschluß auf, an dem ein die Nutzfrequenzbänder zusammenfassender erster Diplexer angeschlossen ist, und weist der Empfangszweig einen Empfangsanschluß auf, an dem ein die Nutzfrequenzbänder trennender zweiter Diplexer angeschlossen ist.

Aufgrund des Vorhandenseins der beiden Diplexer direkt an den Sende- und Empfangsanschlüssen der Sende- bzw. Empfangszweige werden weitere Vorteile erzielt. Die Diplexer weisen eine hohe Filterwirkung auf, so daß zum Beispiel Oberwellen ausgefiltert werden können. Außerdem ist der Aufbau aufgrund des geringen Preises der Diplexer insgesamt billig und ebenso mit kleiner Abmessung verwirklichbar.

Weiterhin besteht die Schalteinrichtung vorzugsweise aus einer in dem Sendezweig in Reihe geschalteten ersten Diode und einer in dem Empfangszweig an einem dem Verbindungsknoten gegenüberliegenden Anschluß des Transformationsglieds parallel zu dem Empfangszweig gegen Masse geschalteten zweiten Diode.

Dadurch, daß die Schalteinrichtung lediglich aus den beiden Dioden besteht, ist die Schalteinrichtung insgesamt kostengünstig und mit kleiner Abmessung herstellbar.

Weitere vorteilhafte Ausgestaltungen der vorliegenden Erfindung sind Gegenstand der Unteransprüche.

Die vorliegende Erfindung wird nachstehend anhand eines Ausführungsbeispiels unter Bezugnahme auf die beiliegende Zeichnung näher erläutert.

Es zeigt:
- Fig. 1: ein Blockschaltbild eines Mehrband-Antennenschalters gemäß einem Ausführungsbeispiel der vorliegenden Erfindung;
- Fig. 2: einen möglichen Aufbau eines in Fig. 1 verwendeten Tiefpasses;
- Fig. 3: einen möglichen Aufbau eines in Fig. 1 verwendeten Transformationsglieds;
- Fig. 4: eine konkrete Ausgestaltung des Mehrband-Antennenschalters gemäß dem Ausführungsbeispiel der vorliegenden Erfindung; und
- Fig. 5: ein Blockschaltbild eines Mehrband-Antennenschalters im Stand der Technik.

Es folgt die Beschreibung eines Ausführungsbeispiels der vorliegenden Erfindung.

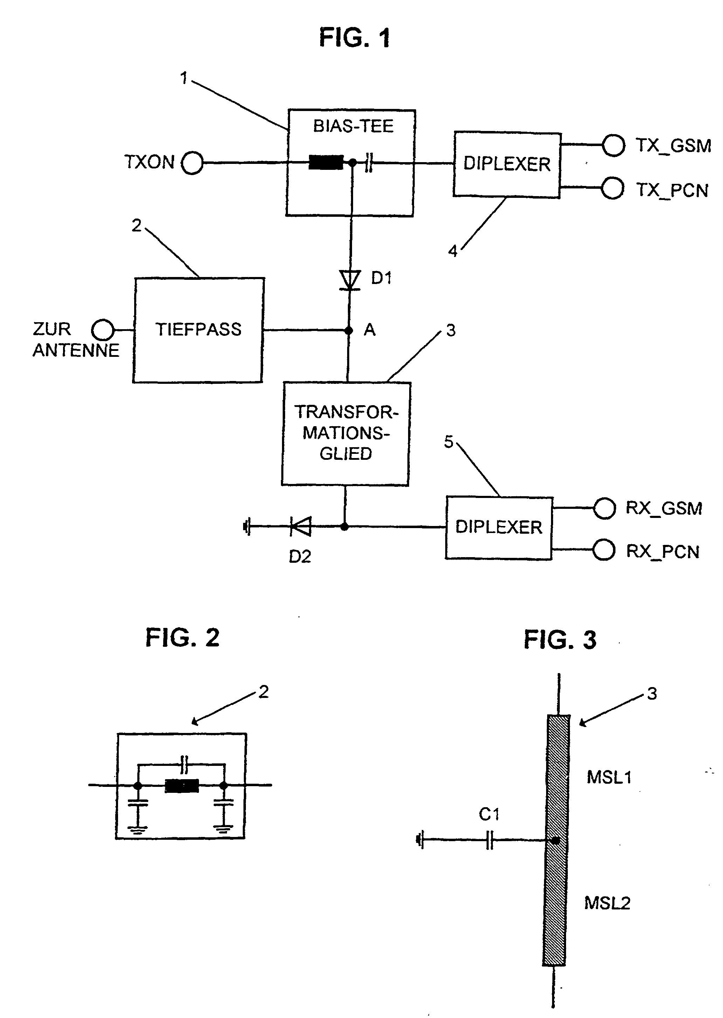

Fig. 1 zeigt einen Mehrband-Antennenschalter gemäß dem Ausführungsbeispiel der vorliegenden Erfindung. Wie es in Fig. 1 gezeigt ist, weist der Mehrband-Antennenschalter gemäß dem Ausführungsbeispiel der vorliegenden Erfindung ein sogenanntes Bias-Tee 1, einen Tiefpaß 2, ein Transformationsglied 3, einen ersten Diplexer 4, einen zweiten Diplexer 5, eine erste Diode D1 und eine zweite Diode D2 auf. Weiterhin sind ein Antennenanschluß, ein Steuersignalanschluß TXON, ein GSM-Sendeanschluß TX_GSM, ein PCN-Sendeanschluß TX_PCN, ein GSM-Empfangsanschluß RX_GSM und ein PCN-Empfangsanschluß RX_PCN vorgesehen.

Wie es in Fig. 1 gezeigt ist, ist der Steuersignalanschluß TXON mit einem Eingangsanschluß des Bias-Tee 1 verbunden. Ein Ausgangsanschluß des ersten Diplexers 4 ist mit einem weiteren Eingangsanschluß des Bias-Tee 1 verbunden. Die GSM- und PCN-Sendeanschlüsse TX_GSM bzw. TX_PCN sind mit zwei Eingangsanschlüssen des ersten Diplexers 4 verbunden. Ein Ausgangsanschluß des Bias-Tee 1 ist mit einer Anode der ersten Diode D1 verbunden. Die Kathode der ersten Diode D1 ist weiterhin mit einem Verbindungsknoten A verbunden.

Weiterhin ist ein Anschluß des Tiefpasses 2 mit dem Verbindungsknoten A verbunden und ist ein weiterer Anschluß des Tiefpasses 2 mit dem Antennenanschluß verbunden. Ebenso ist ein Anschluß des Transformationsglieds 3 mit dem Verbindungsknoten A verbunden und ist ein weiterer Anschluß des Transformationsglieds 3 mit einer Anode der zweiten Diode D2 verbunden. Die Kathode der zweiten Diode D2 ist an Masse gelegt. Ein Eingangsanschluß des zweiten Diplexers 5 ist ebenso mit der Anode der zweiten Diode D2 verbunden. Schließlich sind die GSM- und PCN-Empfangsanschlüsse RX_GSM bzw. RX_PCN mit zwei Ausgangsanschlüssen des zweiten Diplexers 5 verbunden.

Die Funktionsweise des Mehrband-Antennenschalters gemäß dem Ausführungsbeispiel der vorliegenden Erfindung wird nachstehend näher erläutert.

Es ist anzumerken, das ein Sendezweig des in Fig. 1 gezeigten Mehrband-Antennenschalters von dem GSM- oder PCN-Sendeanschluß TX_GSM bzw. TX_PCN über den ersten Diplexer 4, das Bias-Tee 1, die erste Diode D1, den Verbindungsknoten A, den Tiefpaß 2 und den Antennenanschluß zu einer in Fig. 1 nicht dargestellten Antenne, die an den Antennenanschluß angeschlossen ist, gebildet wird, wie es nachstehend detaillierter beschrieben wird.

Weiterhin ist es anzumerken, daß ein Empfangszweig des in Fig. 1 gezeigten Mehrband-Antennenschalters von der in Fig. 1 nicht dargestellten Antenne, die an den Antennenanschluß angeschlossen ist, über den Tiefpaß 2, den Verbindungsknoten A, das Transformationsglied 3 und den zweiten Diplexer 5 zu dem GSM- oder PCN-Empfangsanschluß RX_GSM bzw. RX_PCN gebildet wird, wie es nachstehend detaillierter beschrieben wird.

Als erstes wird der Sendebetrieb des Mehrband-Antennenschalters gemäß dem Ausführungsbeispiel der vorliegenden Erfindung detaillierter beschrieben.

Im Sendebetrieb wird an den Steuersignalanschluß TXON ein Steuersignal eines logisch hohen Pegels angelegt, so daß die ersten und zweiten Dioden D1 bzw. D2 in Vorwärtsrichtung derart vorgespannt werden, daß ihr Schwellwert überschritten wird, wodurch sie sich im leitenden Zustand befinden. Der in Fig. 1 im Bias-Tee 1 dargestellte Kondensator sorgt dabei dafür, daß das Steuersignal eines logisch hohen Pegels nicht zum dem ersten Diplexer 4 gelangt, da er als Gleichstromsperre wirkt.

Ein wesentlicher Punkt der vorliegenden Erfindung besteht darin, daß die zweite Diode D2 in Verbindung mit dem Transformationsglied 3 derart arbeitet, daß bei dem höherfrequenten Nutzfrequenzbereich, das heißt, bei dem Nutzfrequenzbereich des Standards PCN bzw. Personal Communication Network bei 1800 MHz, ein Leerlauf des Empfangszweigs am Verbindungsknoten A erzielt wird. Dies bedeutet, daß das Transformationsglied 3 bei 1800 MHz eine Phasendrehung von 180° liefert. Aufgrund des Leerlaufs ist der Empfangszweig bei dem höherfrequenten Nutzfrequenzbereich bei 1800 MHz des Standards PCN von dem Sendezweig entkoppelt.

Demgemäß können von dem PCN-Sendeanschluß TX_PCN über den ersten Diplexer 4, das Bias-Tee 1 und die erste Diode 1 zu dem Verbindungsknoten A gelieferte PCN-Sendesignale weiterhin über den Tiefpaß 2 und den Antennenanschluß zu einer in Fig. 1 nicht dargestellten Antenne, die an den Antennenanschluß angeschlossen ist, abgegeben werden und schließlich von dieser abgestrahlt werden, ohne daß dabei der Empfangszweig beeinflußt wird, da dieser über das Transformationsglied 3 von dem Sendezweig entkoppelt ist.

Weiterhin ist anzumerken, daß das hochfrequente Sendesignal nicht über das Bias-Tee 1 in die an den Steuersignalanschluß TXON angeschlossene Steuerlogik gelangt, die in Fig. 1 nicht dargestellt ist, da die in dem Bias-Tee 1 dargestellte Induktivität für hochfrequente Signale als Wechselstromsperre wirkt.

Um einen Sendebetrieb im niederfrequenten Nutzfrequenzbereich, das heißt, im Nutzfrequenzbereich des Standards GSM bei 900 MHz, zu gewährleisten, besteht ein weiterer wesentlicher Punkt der vorliegenden Erfindung darin, daß der Verlauf der Ortskurve der Eingangsimpedanz des Tiefpasses 2 am Verbindungsknoten A zweckmäßig festgelegt wird.

Genauer gesagt wird die Eingangsimpedanz des Tiefpasses 2 bei 900 MHz derart ausgewählt, daß diese den nichtohmschen bzw. induktiven Anteil der Impedanz des Empfangszweigs, das heißt, der Eingangsimpedanz des Transformationsglieds 3 am Verbindungsknoten A, nahezu vollständig kompensiert. Demgemäß ist auch bei dem Sendebetrieb im niederfrequenten Nutzfrequenzbereich eine Entkopplung zwischen dem Sende- und Empfangszweig sichergestellt.

Das heißt, es ist von den Erfindern der vorliegenden Erfindung festgestellt worden, daß es für den problemlosen Sendebetrieb in sowohl einem niederfrequenten Nutzfrequenzbereich (GSM bei 900 MHz) als auch in einem höherfrequenten Nutzfrequenzbereich (PCN bei 1800 MHz) erforderlich ist, zwei wichtige Bedingungen zu erfüllen.

Zum einen muß das Transformationsglied 3 bei dem höherfrequenten Nutzfrequenzbereich einen Leerlauf (kein Stromfluß) des Empfangszweigs an dem Verbindungsknoten A bewirken und zum anderen muß eine derartige Abstimmung des Tiefpasses 2 und des Transformationsglieds 3 bei dem niederfrequenten Nutzfrequenzbereich erzielt werden, daß der nichtohmsche Anteil der Eingangsimpedanz des Transformationsglieds 3 im wesentlichen kompensiert wird.

Nachstehend wird der Empfangsbetrieb des Mehrband-Antennenschalters gemäß dem Ausführungsbeispiel der vorliegenden Erfindung detaillierter beschrieben.

Der Empfangsbetrieb des Mehrband-Antennenschalter gestaltet sich wesentlich einfacher als der zuvor beschriebene Sendebetrieb.

Für sowohl den GSM- als den PCN-Empfangsbetrieb gelten die nachstehend durchgeführten Äußerungen analog. Bei dem Empfangsbetrieb liegt am Steuersignalanschluß TXON ein Signal eines logisch niedrigen Pegels an, wodurch die ersten und zweiten Dioden D1 und D2 in Vorwärtsrichtung sperrend sind. Da die erste Diode D1 mit der Kathode an den Verbindungsknoten A angeschlossen ist, sperrt sie das von der Antenne über den Antennenanschluß und den Tiefpaß 2 ankommende Empfangssignal und entkoppelt somit den Sendezweig von dem Empfangszweig. Weiterhin ist die zweite Diode D2 für das ankommende Empfangssignal gesperrt, so daß das Empfangssignal über den zweiten Diplexer 5 zu dem GSM- oder PCN-Empfangsanschluß RX_GSM bzw. RX_PCN gelangt.

Es ist anzumerken, daß somit bei Erfüllung der zuvor erläuterten zwei wichtigen Bedingungen in Kombination mit einer Abstimmung der ersten und zweiten Diplexer 4 bzw. 5 in den Sende- bzw. Empfangszweigen gemäß diesem Ausführungsbeispiel der vorliegenden Erfindung eine individuelle Abstimmung aller Sende- und Empfangsanschlüsse des Mehrband-Antennenschalters möglich ist. Weiterhin weist der Mehrband-Antennenschalter zugleich die Funktion eines Oberwellenfilters für jeweilige Sender auf und weist gleichzeitig eine ausgeprägte Tiefpaßcharakteristik bezüglich des Empfangszweigs auf.

Der in dem Ausführungsbeispiel der vorliegenden Erfindung vorhandene Tiefpaß 2 muß nicht zusätzlich vorgesehen werden, vielmehr handelt es sich dabei um einen in der Regel ohnehin erforderlichen Antennentiefpaß. Außerdem besteht die Möglichkeit, die parasitäre Induktivität der zweiten Diode D2 dahingehend zu nutzen, daß das Transformationsglied 3 anstatt einer Phasendrehung von 180° lediglich eine Phasendrehung von ungefähr 155° durchführen muß. Jedoch ist es bei nichtkompensierter parasitärer Induktivität dieser zweiten Diode D2 erforderlich, eine induktivitätsarme PIN-Diode zu verwenden, um eine gute Isolation des Empfangszweigs von dem Sendezweig zu erzielen.

Es wird auf Fig. 2 verwiesen. Fig. 2 zeigt einen möglichen Aufbau des in Fig. 1 verwendeten Tiefpasses 2.

Dieser mögliche Aufbau besteht aus insgesamt drei Kapazitäten und einer Induktivität. Dabei ist eine Kapazität parallel zu der Induktivität geschaltet und sind erste Anschlüsse der beiden anderen Kapazitäten an die jeweiligen Enden der Parallelschaltung angeschlossen und sind weiterhin die beiden anderen Anschlüsse der Kapazitäten an Masse gelegt.

Jedoch können anstelle des zuvor beschriebenen Tiefpasses mit konzentrierten Elementen auch andere Formen eines Tiefpasses verwendet werden. Zum Beispiel kann ebenso ein Aufbau eines Tiefpasses mit Leitungsstrukturen verwendet werden, usw. Es ist lediglich erforderlich, daß die Eingangsimpedanz des verwendeten Tiefpasses am Verbindungsknoten A in Fig. 1 im niederfrequenten Nutzfrequenzbereich gerade den nichtohmschen Anteil des Transformationsglieds 3 am Verbindungsknoten A kompensiert.

Es wird auf Fig. 3 verwiesen. Fig. 3 zeigt einen möglichen Aufbau des in Fig. 1 verwendeten Transformationsglieds 3.

Dieser mögliche Aufbau besteht aus zwei identischen Mikrostreifenleitungen MSL1 und MSL2 und einer Kapazität C1, die an einem Anschluß von ihr zwischen diesen Mikrostreifenleitungen MSL1 und MSL2 angeschlossen ist und an einem anderen Anschluß von ihr an Masse gelegt ist. Dadurch kann das Transformationsglied 3 in Fig. 1 platzsparend als T-Glied verwirklicht werden. Wenn, wie es zuvor beschrieben worden, ebenso die parasitäre Induktivität der zweiten Diode berücksichtigt wird, ergibt sich die Möglichkeit einer weiteren Leitungsverkürzung.

Jedoch können anstelle des zuvor beschriebenen Transformationsglieds auch andere Formen eines Transformationsglieds verwendet werden. Zum Beispiel können ohne Einschränkungen anstelle der Mikrostreifenleitungen ebenso andere verlustarme Leitungstypen verwendet werden oder kann ebenso eine einzelne, entsprechend längere Leitung ohne Verwendung der Kapazität C1 mit gleicher Phasendrehung verwendet werden.

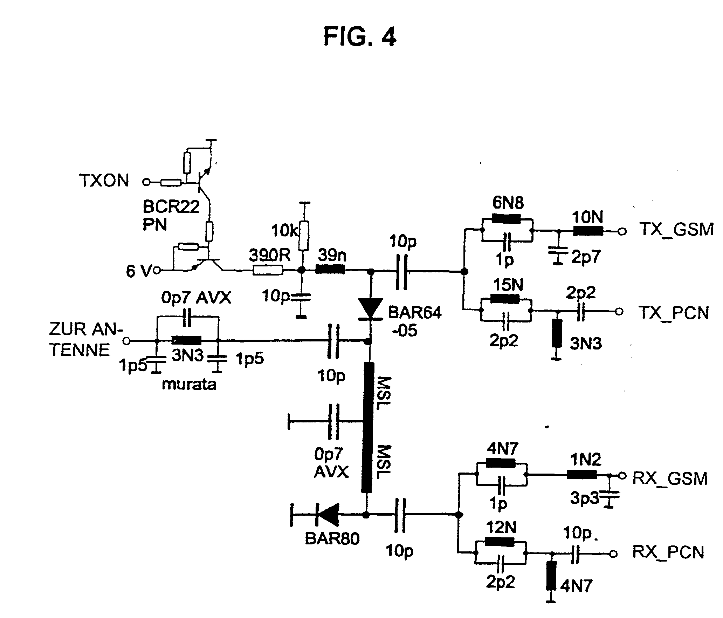

Zur Vervollständigung wird auf Fig. 4 verwiesen, in der zuvor Verdeutlichung der Durchführbarkeit der vorliegenden Erfindung eine konkrete Ausgestaltung des Mehrband-Antennenschalters gemäß dem Ausführungsbeispiel der vorliegenden Erfindung gezeigt ist. In Fig. 3 sind die jeweils verwendeten Typen von Bauteilen entsprechend bezeichnet. Auf eine detaillierte Beschreibung dieser konkreten Ausgestaltung wird an dieser Stelle aus Gründen der Kürze jedoch verzichtet.

Der zuvor beschriebene Mehrband-Antennenschalter gemäß dem Ausführungsbeispiel der vorliegenden Erfindung weist die folgenden wesentlichen Vorteile auf.

Zum einen sind keine Logikgatter zum Erzeugen von getrennten Steuersignalen für die Sende- und Empfangsbetriebe, wie zum Beispiel TXON-GSM, TXON_PCN, RXON_GSM und RXON_PCN, erforderlich. Weiterhin weist der Mehrband-Antennenschalter eine geringe Abmessung auf, da zum Beispiel die Länge der Mikrostreifenleitungen in Summe lediglich ungefähr 15 mm beträgt (ungefähr im Bereich λ/4). Wesentlich is es ebenso, hervorzuheben, daß der Mehrband-Antennenschalter lediglich im Sendebetrieb Strom aufnimmt, da im Empfangsbetrieb kein Steuersignal angelegt wird.

Der Mehrband-Antennenschalter ist weiterhin sehr billig. Die Kosten liegen derzeit im Bereich von ungefähr DM 1,30, was gegenüber dem in der Beschreibungseinleitung angesprochenen Stand der Technik eine Kostenersparnis von DM 0,70 bedeutet.

Schließlich weist der Mehrband-Antennenschalter hervorragende Eigenschaften hinsichtlich der Isolation der Empfangsanschlüsse auf.

Zum Schluß sei noch darauf verwiesen, daß, obgleich gemäß dem Ausführungsbeispiel der vorliegenden Erfindung, der Mehrband-Antennensachalter bei den Nutzfrequenzbändern der Standards GSM und PCN bei 900 MHz bzw. 1800 MHz verwendet worden ist, die obere Grenzfrequenz des Mehrband-Antennenschalters ohne größere Änderungen bis auf 2300 MHz eingestellt werden kann. Dies läßt unter anderem eine spätere Verwendung bei Nutzfrequenzbereichen von 900 MHz und 1900 MHz zu, wobei dies durch alleinige Bestückungsänderung der ersten und zweiten Diplexer 4 bzw. 5 und zum Beispiel des Kondensators C1 im Transformationsglied in Fig. 3 erzielt werden kann.

Bezüglich noch weiterer, nicht näher erläuterter Wirkungen, und Vorteile der vorliegenden Erfindung wird ausdrücklich auf die Offenbarung der Figuren verwiesen.

## Patentansprüche

1. Mehrband-Antennenschalter für ein erstes und zweites Nutzfrequenzband, wobei das erste Nutzfrequenzband eine höhere Frequenz als das zweite Nutzfrequenzband aufweist, mit:
einem Sende- und einem Empfangszweig, die parallel zueinander angeordnet und an einem Verbindungsknoten (A) miteinander verbunden sind;
einem in dem Empfangszweig angeordneten Transformationsglied (3);
einem zwischen dem Verbindungsknoten (A) und einem Antennenanschluß angeordnete Filtereinrichtung (2); und
einer mittels eines vorbestimmten logischen Signals ansteuerbaren Schalteinrichtung (D1, D2), wobei
die Schalteinrichtung (D1, D2) auf ein Anlegen des vorbestimmten logischen Signals (TXON) hin den Sendezweig mit dem Antennenanschluß verbindet und ansonsten der Sendezweig von dem Antennenanschluß getrennt und der Empfangszweig mit dem Antennenanschluß verbunden ist, und
das Transformationsglied (3) im Sendefall bezüglich des ersten Nutzfrequenzbands einen Leerlauf des Empfangszweigs an dem Verbindungsknoten (A) bewirkt,
**dadurch gekennzeichnet, dass**
das Transformationsglied (3) und die Filtereinrichtung (2) derart aufeinander abgestimmt sind, daß im Sendefall bezüglich des zweiten Nutzfrequenzbands ein nichtohmscher Anteil einer Eingangsimpedanz des Transformationsglieds (3) an dem Verbindungsknoten (A) im wesentlichen kompensiert wird.

2. Mehrband-Antennenschalter nach Anspruch 1, **dadurch gekennzeichnet, daß**
der Sendezweig einen Sendeanschluß aufweist, an dem ein die Nutzfrequenzbänder zusammenfassender erster Diplexer (4) angeschlossen ist; und
der Empfangszweig einen Empfangsanschluß aufweist, an dem ein die Nutzfrequenzbänder trennender zweiter Diplexer (5) angeschlossen ist.

3. Mehrband-Antennenschalter nach Anspruch 1 oder 2, **dadurch gekennzeichnet, daß** die Schalteinrichtung (D1, D2) aus einer in dem Sendezweig in Reihe geschalteten ersten Diode (D1) und einer in dem Empfangszweig an einem dem Verbindungsknoten (A) gegenüberliegenden Anschluß des Transformationsglieds (3) parallel zu dem Empfangszweig gegen Masse geschalteten zweiten Diode (D2) besteht.

4. Mehrband-Antennenschalter nach einem der vorhergehenden Ansprüche, **dadurch gekennzeichnet, daß** das Transformationsglied (3) aus zwei Mikrostreifenleitungen (MSL1, MSL2) und einer mit einem Anschluß zwischen den Mikrostreifenleitungen (MSL1, MSL2) und mit einem anderen Anschluß an Masse angeschlossenen Kapazität (C1) besteht.

5. Mehrband-Antennenschalter nach einem der Ansprüche 1 bis 3, **dadurch gekennzeichnet, daß** das Transformationsglied (3) aus einer einzigen Mikrostreifenleitung besteht.

6. Mehrband-Antennenschalter nach Anspruch 4 oder 5, **dadurch gekennzeichnet, daß** anstelle der Mikrostreifenleitungen andere Typen verlustarmer Leitungen verwendet werden.

7. Mehrband-Antennenschalter nach einem der vorhergehenden Ansprüche, **dadurch gekennzeichnet, daß** die Filtereinrichtung (2) aus einem Tiefpaß mit konzentrierten Elementen besteht, wobei die konzentrierten Elemente eine Parallelschaltung einer Kapazität und einer Induktivität und eine Schaltung zweier Kapazitäten an den jeweiligen Enden der Parallelschaltung gegen Masse ausbilden.

8. Mehrband-Antennenschalter nach einem der Ansprüche 1 bis 6, **dadurch gekennzeichnet, daß** die Filtereinrichtung (2) aus einem Tiefpaß besteht, der unter Verwendung von Leitungsstrukturen ausgebildet ist.

9. Mehrband-Antennenschalter nach einem der vorhergehenden Ansprüche, **dadurch gekennzeichnet, daß** sich das niederfrequente Nutzfrequenzband bei 900 MHz und das höherfrequente Nutzfrequenzband bei 1800 MHz befindet.

10. Mehrband-Antennenschalter nach einem der vorhergehenden Ansprüche, **dadurch gekennzeichnet, daß** sich das niederfrequente Nutzfrequenzband bei 900 MHz und das höherfrequente Nutzfrequenzband bei 1900 MHz befindet.

11. Mehrband-Antennenschalter nach einem der vorhergehenden Ansprüche, **dadurch gekennzeichnet, dass** seine obere Grenzfrequenz bis auf 2300 MHz einstellbar ist.

## Claims

1. Multiband antenna switch for a first and second useful-frequency band, the first useful-frequency band having a higher frequency than the second useful-frequency band, comprising:
a transmitting and a receiving branch which are arranged in parallel with one another and are connected to one another at a circuit node (A);
a matching pad (3) arranged in the receiving branch;
a filtering device (2) arranged between the circuit node (A) and an antenna terminal; and
a switching device (D1, D2) which can be activated by means of a predetermined logic signal, wherein
the switching device (D1, D2), following an application of the predetermined logical signal (TXON), connects the transmitting branch to the antenna terminal and
otherwise the transmitting branch is separated from the antenna terminal and the receiving branch is connected to the antenna terminal, and
the matching pad (3), in the transmit case, effects an open-circuit operation of the receiving branch at the circuit node (A) with respect to the first useful-frequency band, caharcterized in that
the matching pad (3) and the filtering device (2) are tuned to one another in such a manner that, in the transmit case, a non-resistive component of an input impedance of the matching pad (3) is essentially compensated for at the circuit node (A) with respect to the second useful-frequency band.

2. Multiband antenna switch according to Claim 1, **characterized in that** the transmitting branch has a transmit terminal to which a first diplexer (4) combining the useful-frequency bands is connected; and the receiving branch has a receive terminal to which a second diplexer (5) separating the useful-frequency bands is connected.

3. The multiband antenna switch according to Claim 1 or 2, **characterized in that** the switching device (D1, D2) consists of a first diode (D1) connected in series in the transmitting branch and a second diode (D2) connected to earth in parallel with the receiving branch at a terminal of the matching pad (3) opposite to the circuit node (A) in the receiving branch.

4. Multiband antenna switch as claimed in one of the preceding claims, **characterized in that** the matching pad (3) consists of two microstrip lines (MSL1, MSL2) and a capacitance (C1) connected with one terminal between the microstrip lines (MSL1, MSL2) and to earth with another terminal.

5. Multiband antenna switch as claimed in one of Claims 1 to 3, **characterized in that** the matching pad (3) consists of a single microstrip line.

6. Multiband antenna switch according to Claim 4 or 5, **characterized in that** other types of low-loss lines are used instead of the microstrip lines.

7. Multiband antenna switch as claimed in one of the preceding claims, **characterized in that** the filtering device (2) consists of a low-pass filter with concentrated elements, the concentrated elements forming a parallel circuit of a capacitance and an inductance and a connection of two capacitances to earth at the respective ends of the parallel circuit.

8. Multiband antenna switch as claimed in one of Claims 1 to 6, **characterized in that** the filtering device (2) consists of a low-pass filter which is constructed by using line structures.

9. Multiband antenna switch as claimed in one of the preceding claims, **characterized in that** the lower-frequency useful-frequency band is at 900 MHz and the higher-frequency useful-frequency band is at 1 800 MHz.

10. Multiband antenna switch as claimed in one of the preceding claims, **characterized in that** the lower-frequency useful-frequency band is at 900 MHz and the higher-frequency useful-frequency band is at 1 900 MHz.

11. The multiband antenna switch according to one of the preceding claims, **characterized in that** its upper cut-off frequency can be set to up to 2300 MHz.

## Revendications

1. Commutateur d'antenne multibande pour une première et une deuxième bandes de fréquences utiles, la première bande de fréquences utiles ayant une fréquence supérieure à celle de la deuxième bande de fréquences utiles, comprenant
une branche d'émission et une branche de réception disposées parallèlement l'une à l'autre et reliées entre elles au niveau d'un noeud de liaison (A);
un élément de transformation (3) disposé sur la branche de réception;
un dispositif de filtrage (2) disposé entre le noeud de liaison (A) et un raccord d'antenne et
un dispositif de commutation (D1, D2) excitable au moyen d'un signal logique prédéterminé,
le dispositif de commutation (D1, D2) reliant, sur application du signal logique prédéterminé (TXON), la branche d'émission au raccord d'antenne, la branche d'émission étant autrement séparée du raccord d'antenne et la branche de réception, étant reliée au raccord d'antenne, et l'élément de transformation (3) provoquant une inactivité de la branche de réception au niveau du noeud de liaison (A) en cas d'émission par rapport à la première bande de fréquences utiles,
**caractérisé en ce que**
l'élément de transformation (3) et le dispositif de filtrage (2) sont accordés l'un à l'autre de manière telle qu'en cas d'émission par rapport à la deuxième bande de fréquences utiles une fraction non ohmique d'une impédance d'entrée de l'élément de transformation (3) est substantiellement compensée au niveau du noeud de liaison (A).

2. Commutateur d'antenne multibande selon la revendication 1, **caractérisé en ce que**
la branche d'émission comporte un raccord émetteur auquel est raccordé un premier diplexeur (4) qui réunit les bandes de fréquences utiles et
**en ce que** la branche de réception comporte un raccord récepteur auquel est raccordé un deuxième diplexeur (5) qui sépare les bandes de fréquences utiles.

3. Commutateur d'antenne multibande selon la revendication 1 ou 2, **caractérisé en ce que** le dispositif de commutation (D1, D2) se compose de préférence d'une première diode (D1) montée en série sur la branche d'émission et d'une deuxième diode (D2) montée en parallèle avec la branche de réception, contre masse, sur la branche de réception au niveau d'un raccord de l'élément de transformation (3) à l'opposé du noeud de liaison (A).

4. Commutateur d'antenne multibande selon l'une des revendications précédentes, **caractérisé en ce que** l'élément de transformation (3) se compose de deux lignes microbandes (MSL1, MSL2) et d'une capacité (C1) raccordée entre les lignes microbandes (MSL1, MSL2) en un raccord et mise à la masse en un autre raccord.

5. Commutateur d'antenne multibande selon l'une des revendications 1 à 3, **caractérisé en ce que** l'élément de transformation (3) se compose d'une seule ligne microbande.

6. Commutateur d'antenne multibande selon la revendication 4 ou 5, **caractérisé en ce que** sont utilisées, au lieu des lignes microbandes, d'autres types de lignes à faible perte.

7. Commutateur d'antenne multibande selon l'une des revendications précédentes, **caractérisé en ce que** le dispositif de filtrage (2) se compose d'un passe-bas avec des éléments concentrés, les éléments concentrés constituant un montage en parallèle d'une capacité et d'une inductance et un montage de deux capacités contre masse aux extrémités respectives du montage en parallèle.

8. Commutateur d'antenne multibande selon l'une des revendications 1 à 6, **caractérisé en ce que** le dispositif de filtrage (2) se compose d'un passe-bas réalisé moyennant l'utilisation de structures de lignes.

9. Commutateur d'antenne multibande selon l'une des revendications précédentes, **caractérisé en ce que** la bande de fréquences utiles à fréquence inférieure est située à 900 MHz et la bande de fréquences utiles à fréquence supérieure, à 1800 MHz.

10. Commutateur d'antenne multibande selon l'une des revendications précédentes, **caractérisé en ce que** la bande de fréquences utiles à fréquence inférieure est située à 900 MHz et la bande de fréquences utiles à fréquence supérieure, à 1900 MHz.

11. Commutateur d'antenne multibande selon l'une des revendications précédentes, **caractérisé en ce que** sa fréquence limite supérieure peut être portée jusqu'à 2300 MHz.
